**Europäisches Patentamt**

**European Patent Office**

**Office européen des brevets**

(19)

(11) Veröffentlichungsnummer : **0 076 246**
**B1**

(12)

# EUROPÄISCHE PATENTSCHRIFT

(45) Veröffentlichungstag der Patentschrift :
28.11.84

(21) Anmeldenummer : 82890105.8

(22) Anmeldetag : 26.07.82

(51) Int. Cl.³ : **B 29 D   7/24**

(54) **Verfahren zur Herstellung von monoaxial verstreckten Folien aus Polytetrafluoräthylen.**

(30) Priorität : 24.09.81 AT 4098/81

(43) Veröffentlichungstag der Anmeldung :
06.04.83 Patentblatt 83/14

(45) Bekanntmachung des Hinweises auf die Patenterteilung : 28.11.84 Patentblatt 84/48

(84) Benannte Vertragsstaaten :
**DE FR GB IT**

(56) Entgegenhaltungen :
**DE-B- 1 554 879**

(73) Patentinhaber : **Chemiefaser Lenzing Aktiengesellschaft**
**A-4860 Lenzing (AT)**

(72) Erfinder : **Weinrotter, Klaus, Dr. Dipl.-Ing.**
**Edisonstrasse 3**
**A-4840 Vöcklabruck (AT)**
Erfinder : **Wimmer, Adalbert**
**Am Tennisplatz 1**
**A-4840 Vöcklabruck (AT)**
Erfinder : **Krässig, Hans, Ao. Univ.-Prof. Dipl.-Ing.**
**DDr.**
**Aussichtsweg 14**
**A-4863 Seewalchen (AT)**
Erfinder : **Andorfer, Dieter, Dipl.-Ing.**
**Haydnstrasse 20**
**A-4800 Attnang-Puchheim (AT)**

(74) Vertreter : **Wolfram, Gustav, Dipl.-Ing.**
**Schwindgasse 7 P.O. Box 205**
**A-1041 Wien (AT)**

**Beschreibung**

Die Erfindung betrifft ein Verfahren zur Herstellung von monoaxial verstreckten Folien aus Polytetrafluoräthylen, wobei Polytetrafluoräthylen-Pulver zu einem zylindrischen Formkörper verpreßt und anschließend gesintert wird, worauf von dem Formkörper Folien abgeschält werden (Druckschrift der Fœ. Hoechst, Kunststoffe, Hostaflon, März 1976).

Es ist bekannt, Folien aus PTFE in Stärken von 0,050 mm bis 5 mm durch Schälen herzustellen. Dabei wird zunächst PTFE-Pulver zu einem Hohlzylinder verpreßt. Dieser Formkörper wird gesintert, und anschließend werden davon auf einer Schälanlage Folien der gewünschten Stärke abgeschält.

Die auf diese Weise gewonnenen Folien weisen Festigkeiten von lediglich etwa 35 N/nm² bei einer Dehnung von 400 bis 500 % auf.

Weiters wurde bereits vorgeschlagen, Folien nach dem wesentlich aufwendigeren Pastenextrusionsverfahren zu erzeugen, wobei eine pastenförmige Masse, welche im wesentlichen PTFE-Pulver und hochsiedende Benzine enthält, durch eine Breitschlitzdüse gepreßt wird, die Benzinanteile anschließend verdampft werden und die PTFE-Teilchen zu einer zusammenhängenden Folie gesintert werden. Die resultierenden PTFE-Folien erreichen zwar durch nachfolgendes Kalandrieren relativ hohe Festigkeit, ihre elektrische Durchschlagfestigkeit weist jedoch infolge der verbliebenen Restporosität meist keine befriedigend hohen Werte auf.

Die Erfindung stellt sich die Aufgabe, ein einfaches und betriebssicheres Verfahren zur Herstellung von dünnen Folien, welche hohe mechanische Festigkeit bei gleichzeitig hoher elektrischer Durchschlagfestigkeit aufweisen, zu schaffen.

Die gestellte Aufgabe wird bei einem Verfahren der eingangs erwähnten Art erfindungsgemäß dadurch gelöst, daß die geschälte Folie auf Temperaturen zwischen 327 °C und 400 °C, vorzugsweise zwischen 380 °C und 390 °C, erhitzt und monoaxial verstreckt wird.

Eine so hergestellte Folie ist weniger als 0,05 mm stark und weist Festigkeitswerte in Verstreckungsrichtung zwischen 50 N/nm² und 140 N/nm², Dehnungswerte in Verstreckungsrichtung zwischen 20 und 150 % und eine elektrische Durchschlagsfestigkeit — gemessen mit Wechselspannung von 50 Hz — zwischen 80 kV/mm und 160 kV/mm auf.

Wird die elektrische Durchschlagsfestigkeit mit Gleichspannung gemessen, ergeben sich Werte zwischen 150 und 350 kV/mm.

Bei 327 °C liegt der Umwandlungspunkt der PTFE-Kristallite, oberhalb welchem diese gelieren und glasartig transparent werden. Bei Temperaturen über 400 °C beginnt sich PTFE unter Bildung fluorhaltiger Produkte zu zersetzen.

Zweckmäßig wird die Folie in einem Verhältnis zwischen 1 : 1,5 und 1 : 10, vorzugsweise zwischen 1 : 3,5 und 1 : 6,3 verstreckt.

Der Verstreckprozeß kann ein- oder mehrstufig durchgeführt werden.

Die Erfindung wird durch folgende Beispiele näher erläutert. Festigkeit und Dehnung wurden in Verstreckungsrichtung gemessen.

Beispiel 1

Eine durch Abschälen von einem zylindrischen PTFE-Formkörper hergestellte Primärfolie von 0,040 mm Dicke wird mittels eines Heizbügels auf 380 °C erhitzt und im Verhältnis 1 : 3,5 verstreckt. Man erhält eine Folie von 0,020 mm Stärke und einer Festigkeit von 105 N/mm² bei 80 % Dehnung. Die mit Wechselspannung von 50 Hz gemessene elektrische Durchschlagsfestigkeit liegt bei 140 kV/mm.

Beispiel 2

Eine Primärfolie von 0,10 mm Stärke wird durch ein beheiztes Bad geführt und so auf 390 °C erhitzt und anschließend im Verhältnis 1 : 5,0 verstreckt. Die erhaltene Folie ist 0,045 mm stark und weist eine Festigkeit von 120 N/mm² bei 45,0 % Dehnung auf, die elektrische Durchschlagsfestigkeit (Wechselspannung, 50 Hz) beträgt 130 kV/mm.

Beispiel 3

Als Primärfolie wird eine solche einer Stärke von 0,02 mm eingesetzt, welche mittels Heißluft auf 390 °C erhitzt und im Verhältnis 1 : 6 verstreckt wird. Man erhält eine Folie von 0,008 mm Stärke mit einer Festigkeit von 125 N/mm² und 30 % Dehnung. Die elektrische Durchschlagsfestigkeit beträgt, gemessen mit Wechselspannung, 160 kV/mm.

Beispiel 4

Eine Primärfolie von 0,050 mm Dicke wird über eine Walze geführt, dabei auf 390 °C erhitzt und im Verhältnis 1 : 3,5 mit einer zweiten, auf 380 °C erhitzten Walze abgezogen. Von letzterer wird die Folie mit einem weiteren Walzenaggregat im Verhältnis 1 : 1,8 abgezogen, woraus sich ein Gesamtstreckverhältnis von 1 : 6,3 ergibt. Die erhaltene Folie von 0,02 mm Dicke hat eine Festigkeit von 130 N/mm² bei einer Dehnung von 25 %. Die elektrische Durchschlagsfestigkeit beträgt 145 kV/mm (Wechselstrom).

**Ansprüche**

1. Verfahren zur Herstellung von monoaxial verstreckten Folien aus Polytetrafluoräthylen, wobei Polytetrafluoräthylen-Pulver zu einem zylindrischen Formkörper verpreßt und anschließend gesintert wird, worauf von dem Formkörper Folien abgeschält werden, dadurch gekennzeichnet, daß die geschälte Folie auf Temperaturen zwischen 327 °C und 400 °C, vorzugsweise zwischen 380 °C und 390 °C, erhitzt und monoaxial verstreckt wird.

2. Verfahren nach Anspruch 1, dadurch gekennzeichnet, daß die Folie in einem Verhältnis zwischen 1 : 1,5 und 1 : 10, vorzugsweise zwischen 1 : 3,5 und 1 : 6,3, verstreckt wird.

## Claims

1. A method for the production of monoaxially drawn films of polytetrafluorethylene by compressing polytetrafluorethylene powder into a cylindrical shaped body and subsequently sintering the same, whereupon films are peeled off the shaped body, characterised in that the peeled film is heated to temperatures of between 327 °C and 400 °C, preferably between 380 °C and 390 °C, and is monoaxially drawn.

2. A method according to claim 1, characterised in that the film is drawn at a ratio of between 1 : 1.5 and 1 : 10, preferably between 1 : 3.5 and 1 : 6.3.

## Revendications

1. Procédé de préparation de feuilles de polytrafluoréthylène soumises à étirage monoaxial dans lequel on moule par compression de la poudre de polytétrafluoréthylène sous la forme d'un objet moulé cylindrique et on fritte ensuite après quoi on forme des feuilles par tranchage et déroulement de l'objet moulé, caractérisé en ce que l'on chauffe la feuille obtenue par tranchage et déroulement à des températures de 327 à 400 °C, de préférence de 380 à 390 °C et on la soumet à étirage monoaxial.

2. Procédé selon la revendication 1, caractérisé en ce que l'on étire la feuille à un rapport de 1 : 1,5 à 1 : 10, de préférence de 1 : 3,5 à 1 : 6,3.